# EUROPEAN PATENT APPLICATION

(11) **EP 2 894 058 A1**
(43) Date of publication of application: **15.07.2015**
(21) Application number: 15150253.1
(22) Date of filing: 07.01.2015
(51) Int. Cl.: B60L 11/18, H02J 7/00

(54) **Portable compound battery system**

(30) Priority: 09.01.2014 TW 103100869
(71) Applicant: Faraday Motor Corporation, Taipei City (TW)
(72) Inventor: Ma, Bin-Yen, Taipei City (TW)
(74) Representative: Wittmann, Günther

(57) **Abstract**

A portable compound battery system comprises at least one or more portable high energy battery sets, a load information center, a fixed high power battery set and a variable output power compound battery management module, wherein the portable high energy battery sets convert the output voltage by means of the variable output power compound battery management module including a variable output power DC/DC converter and then parallel with the fixed high power battery set. The system according to the present invention can determine the output power based on load requirements and overall battery system conditions so as to appropriately provide the electric energy that the load needs or replenish electric energy of the high power battery set. In addition, the portable high energy battery sets according to the present invention enable features in convenience and compactness, so it is possible to recharge using a battery recharger anytime and anywhere.

## Description

### BACKGROUND OF THE INVENTION

### 1. Field of the Invention

The present invention generally relates to a portable compound battery system; in particular, to an improved portable compound battery system applicable to various types of electric vehicles and capable of satisfying multiple requirements encompassing convenient energy replenishment, greater dynamic power supply as well as sufficient cruising distance by means of the energy supply system comprising the portable high energy battery set and the fixed power battery set.

### 2. Description of Related Art

Due to progression in the fields of power electronics and electronic technologies, the demands about sufficiently motor power output of electric vehicle are not major issues anymore; however, to replenish electric energy in electric vehicle becomes a critical challenge.

Basically, electric vehicles need to simultaneously satisfy requirements on range and power, thus with the fact that it is relatively challenging to use one single battery set to meet various feature demands at the same time, people have proposed a sort of compound battery system combining the features of high energy battery and high power battery to achieve this goal. Its essential concept lies in that different types of batteries may exhibit different characteristics, and usually the high power density battery has less desirable energy density performance, and vice versa. However, in applications exhibiting high load variation rates, e.g., a common electric vehicle or the like, the requirements on the battery system may focus on both high power and high energy performances. For example, as set forth in the ROC Patent No.494071 publicized on July 11, 2002, the objective thereof is to use a switch to modulate the output power distribution between the high energy battery set and high power battery set thereby satisfying the dynamic power requirement of electric vehicles. Said patent technology needs to first simultaneously detect the output voltage and current values of such two battery sets, acquire signals from an operation sensor (i.e., the acceleration pedal commands) and a torque sensor or the like, and then through computation processes by computers determine the conductance approach of the switch. However, in practice, the bi-directional switch proposed in the above-said Patent may be unable to offer real-time output power distributions of the battery sets; that is, it may not resolve the issue of fast variations in power requirement of electric vehicles.

Furthermore, for example, the technology illustrated in another Patent I259816 aims to combine the advantages of high energy battery and high power battery, and attempts to apply only one simple compound battery management system (i.e., DC/DC converter) in order to restrict the maximum output of the high energy battery set, convert the voltage to the same voltage of the high power battery set, and output via a parallel connection. In case that the load requirement exceeds the upper limit of the power the converter can provide, it is possible to use the parallel connected high power battery set to offer the needed extra power; on the contrary, if the load does not consume the power, the power that the converter processed from the high energy battery can be completely used to recharge the high power battery thereby supplementing the energy previously released from the high power battery. Although this design may be less complicated and practically implement said Patent's technology, the output power of the compound battery management system should reasonably respond to the average consumption power of the load, which may not be too low and can not be adjusted in accordance with the load requirement; consequently, the high power battery (in particular Lead-acid battery) may be adversely recharged with a high C rate thus leading to shortened life span in the high power battery.

Another point that needs to be compromised is that, the internal resistance of the high power battery may generate greater voltage drop due to high current from fast recharging, thus further causing heat consumption and undesirably reducing the recharging efficiency, so precious battery energy may be wasted. In view of this, another patent of innovative model M455644 has been proposed later, describing that the aforementioned compound battery management system (i.e., DC/DC converter) is divided into to two portions, in which the output from a first set of two DC/DC converter sets is connected to the high power battery set, while the output of the second set is directly connected to the load end. Furthermore, through a set of smart switches, it is possible to correspondingly switch the output from the two sets of DC/DC converters and the output from the high power battery set of the compound battery management module in order to respond to different load requirements, and at the same time to protect the high power battery set so that the energy application efficiency and life span thereof will not be affected due to overly fast recharging. This approach may provide certain improvements, but it should be noticed that, by simplifying and controlling vehicle load of continuous variations into two sections of output changes, electric energy replenishment to the high power battery set may still fluctuate due to vehicle load changes, so that the life extension in the high power battery set and its energy conversion efficiency may not be satisfactory.

Hence, in order to overcome the above-said issues, the present invention offers an optimal solution which exploits the advantage of combining the portable high energy battery set with the fixed high power battery set so as to successfully deal with significant load variations of electric vehicle, and at the same time, for satisfying application demands on both high energy and high power conjunctively, proposes a new variable output management system module thereby improving the operation efficiency and application life span of the compound battery set.

### SUMMARY OF THE INVENTION

The present invention is to provide a portable compound battery system which is capable of dealing with significant load variations like electric vehicles and also satisfies application requirements regarding to high energy and high power.

The present invention is to provide a portable compound battery system which is capable of improving energy consumption efficiency among the portable high energy battery set and the fixed high power battery and also extending the life span of entire battery system.

A portable compound battery system capable of achieving the aforementioned objectives comprises: a load information center, electrically connected to a load and used to calculate the total power required for the load and, after detecting the information on the residual capacity and discharge capability of all battery sets in the system, add up the recharge power needed to apply to the fixed high power battery set in order to obtain the power value that the portable high energy battery set should output and generate an output power control signal; at least one or more portable high energy battery sets, electrically connected to the load information center, in which the portable high energy battery sets have a built-in battery management module; a fixed high power battery set, electrically connected to the load information center and used to compensate the power insufficient in the power provided by the portable high energy battery sets in comparison with what the load needs; a variable output power compound battery management module, electrically connected to the portable high energy battery set, the load information center, the fixed high power battery set and the load, in which the variable output power compound battery management module includes a signal communication interface module capable of receiving the output power control signal transferred from the load information center as well as a variable output power DC/DC converter, in which the variable output power DC/DC converter is used to convert the electric energy of the portable high energy battery set into the required power that the load needs to operate, and when the power exceeds what the load needs, the variable output power compound battery management module can recharge additional energy back to the fixed high power battery set in accordance with suitable power.

More specifically, said signal communication interface module may be a digital signal interface or an analog signal interface.

More specifically, said portable high energy battery set may be a high energy Li-ion battery, Li-polymer battery or exchange fuel cell, and there may be one or more portable high energy battery sets in use at the same time.

More specifically, said battery management module of the portable high energy battery set may be used to reduce the difficulty in the portable compound battery system management thereby lowering integral electric control costs and enhancing overall system stability; meanwhile, the battery management module can perform controls on low electricity indication or low electricity cut-off so as to simplify the control mechanism over the back-end variable output power DC/DC converter.

More specifically, said portable high energy battery set may be further electrically connected to an external recharger in order to recharge by means of the external recharger.

More specifically, said variable output power DC/DC converter may be a set of recharger featuring a variable output power and a maximum current limitation. In this way, it is possible to maintain the output electric energy thus that the burden carried by the fixed high power battery set from the electric motor controller (the load) can be reduced and the fixed high power battery set can be replenished with electric energy anytime; hence, unless one single cruise mileage requires more electric energy than the energy in the portable high energy battery set, it needs only to recharge the compact portable high energy battery set. However, if one single cruise mileage indeed requires more electric energy than the energy in the portable high energy battery set, the user may recharge the portable high energy battery set twice, or alternatively utilize two portable high energy battery sets, or even directly recharge the entire compound battery in order to completely replenish electric energy of the fixed high power battery set.

More specifically, said variable output power DC/DC converter may be a boost converter, buck converter or boost-buck converter.

More specifically, said fixed high power battery set may be a battery capable of providing relatively higher discharge current. It may contain some serial/parallel battery cells or serial/parallel battery sets.

More specifically, said fixed high power battery set may be a power-typed Lead-acid battery, Ni-MH battery, Ni-Zn battery, Li-Mn/Li-Fe battery or Li-Polymer battery.

### BRIEF DESCRIPTION OF THE DRAWINGS

Figure 1 shows an overall architecture diagram for the portable compound battery system according to the present invention; and
Figure 2 shows an internal architecture diagram for the variable output power compound battery management module of the portable compound battery system according to the present invention.

### DETAILED DESCRIPTION OF THE PREFERRED EMBODIMENTS

The aforementioned and other technical contents, aspects and effects in relation with the present invention can be clearly appreciated through the detailed descriptions concerning the preferred embodiments of the present invention in conjunction with the appended drawings.

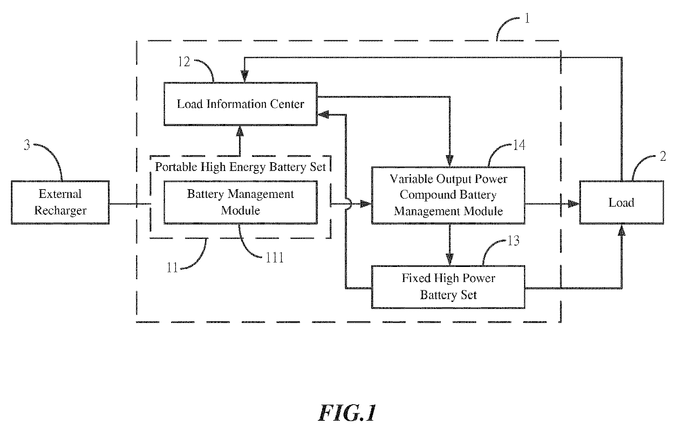

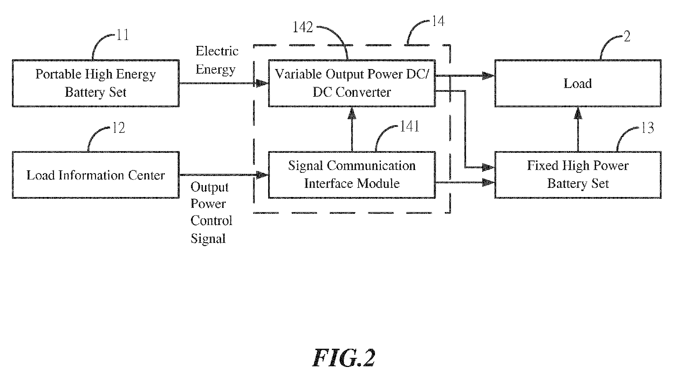

Figures 1 and 2 respectively show an overall architecture diagram for the portable compound battery system and an internal architecture diagram for the variable output power compound battery management module of the portable compound battery system in accordance with the present invention. The portable compound battery system 1 as shown in Figures comprises at least one or more portable high energy battery sets 11, a load information center 12, a fixed high power battery set 13 and a variable output power compound battery management module 14.

Herein the portable high energy battery sets 11 is internally configured with a battery management module 111 so as to reduce the difficulty in the management of the portable compound battery system 1 thereby lowering integral electric control costs and enhancing overall system stability. In addition, the battery management module 111 can output the information on the state of charge (S. O. C.) and cut off the output of the battery set at the low S. O. C. condition, thus simplifying the control of the variable output power DC/DC converter 142. Meanwhile, the portable high energy battery set 11 focuses on the energy density so as to provide sufficient energy required for daily drive range under reasonable weight and volume conditions. However, since it is not designed for high power recharge/ discharge applications, the maximum output power thereof must be limited reasonably in order to resolve issues including negative influences on its life time or safety concerns in use. The battery types that currently suitable and available for such applications include high energy Li-ion battery, Li-Polymer battery, fuel cell; in addition, the portable high energy battery set can be recharged with an external recharger 3 and is by no means limited to only one set in use.

In addition, the load information center 12 is able to calculate the total power that the load 2 needs and, after having received the information of the S. O. C. and discharge ability of all battery sets in the portable compound battery system 1, to determine the power value that the portable high energy battery set 11 ought to output and then transfer this information as digital or analog signals to the variable output power compound battery management module 14. Moreover, for the electric vehicle, the total power that the load 2 needs can be figured out essentially through calculating a product of the speed and the output torque of the motor, and then divided by the efficiency of the motor drive system. The load information center 12 may be an independent module on the electric vehicle, or alternatively configured to be attached to a location, such as a motor controller or dashboard and so forth, where the load requirement information can be acquired.

The variable output power compound battery management module 14 includes a signal communication interface module 141 capable of receiving the output power control signal sent by the load information center 12 as well as a variable output power DC/DC converter 142 allowing variable output power, wherein the signal communication interface module 141 can have a digital signal interface or an analog signal interface, especially since the costs for current digital communication interface have been greatly reduced, the digital communication interface such as the CAN-bus or the like may be an ideal option.

See that the voltages in the portable high energy battery set 11 and in the fixed high power battery set 13 may differ, a variable output power compound battery management module 14 is needed in order to solve the voltage conversion problem. Upon receiving the power control signal, the variable output power compound battery management module 14 converts the electric energy provided by the portable high energy battery set 11 through the variable output power DC/DC converter 142 so that the output voltage can be the same as the voltage of the fixed high power battery set 13 and then can be in parallel connection to the fixed high power battery set 13 thereby offering the power required when the load 2 operates. Moreover, when setting the output power higher than the requirement of the load 2, the variable output power compound battery management module 14 can recharge the fixed high power battery set 13 in accordance with a suitable extra power.

In summary, the fixed high power battery set 13 of the present invention can be considered as a buffer capable of fast discharging. Should the power consumed by the load 2 become greater than the maximum output power that the portable high energy battery set 11 can provide, the fixed high power battery set 13 can compensate the insufficient portion of the overall power requirement.

For example, in case the power required by the load 2 (e.g., 4KW) exceeds the power that the portable high energy battery set 11 can provide via the variable output power compound battery management module 14 (e.g., 1KW), the insufficient portion of it (i.e., 3KW) can be compensated by the fixed high power battery set 13 so that the fixed high power battery set 13 may function as a electric power reservoir to deal with abrupt requirements of the load 2. On the contrary, when the load 2 requirement descends (e.g., 0.7KW), the power that the portable high energy battery set 11 provides by way of the variable output power compound battery management module 14 (e.g., 1KW) will exceed the required power (i.e., 0.3KW more), so the exceeding portion can be used to recharge the fixed high power battery set 13 in order to supplement the energy previously discharged from the fixed high power battery set 13. The selection in terms of the fixed high power battery set 13 may concentrate on the high power discharge feature as well as safety, and currently available options may include power-based Lead-acid battery, Ni-MH battery, Ni-Zn battery, Li-Mn/Li-Fe battery or Li-Polymer battery or the like.

To better illustrate the present invention, an embodiment is provided in which an electric motorcycle comprises a motor drive system of a 4KW maximum output power (in the present embodiment the load 2 represents the motor of the electric motorcycle), and the average consumption power during its normal drive course is approximately 800W. Moreover, the portable high energy battery set 11 configured in the present embodiment is a Lithium-ion battery set (of 29.6V/40.6Ah capacity), and the fixed high power battery set 13 a Lead-acid battery (of 48V/20Ah capacity); additionally, the variable output power compound battery management module 14 has a built-in CAN-bus communication system and includes a variable output power DC/DC converter having a maximum output capacity of 58V/20.7A, i.e., 1200W.

The optimal recharge power of the fixed high power battery set 13 in the present embodiment is 250W, so the output power control signal that the load information center 12 sends to the variable output power compound battery management module 14 should be the load requirement plus the recharge power 250W, as indicated by the following equation: Output Power Control Signal = (Motor Speed * Motor Torque) / System Efficiency + Recharge Power.

Herein take an electric motorcycle of fixed speed 30Km/hr as an example. Assuming it is now to calculate based on a condition that the motor rotation speed is 3000RPM, torque 1.53Nm and motor drive system efficiency 80%, so the load (motor) requirement can be figured out to be 600W; therefore, the load information center 12 generates a control signal of 850W to request the variable output power compound battery management module 14 to output 850W power to the fixed high power battery set 13 for parallel connection, wherein the 600W is required by the load, while the extra 250W can recharge the fixed high power battery set 13.

Suppose at this time the driver wants to speed up by increasing the throttle signal, so the required motor torque increases to 2Nm, the load power now adds up to 628W and efficiency remains at 80%, then the load (motor) requirement should rise up to 785W; therefore, the load information center 12 generates a control signal of 785W+250W=1035W to the variable output power compound battery management module 14, etc. Nevertheless, if the load 2 requirement plus this 250W does exceed 1200W, since the maximum output power of the variable output power compound battery management module 14 has been limited to 1200W, the converted output power should be 1200W.

From the above-said embodiment, it can be seen that, no matter how the load 2 varies, the recharge power to the fixed high power battery set 13 is always kept at 250W or lower, which can improve the energy consumption efficiency and prolong the battery life time. In case that the fixed high power battery set 13 is under a fully recharged condition, then, since the maximum output voltage of the variable output power compound battery management module 14 has been regulated to 58V, which is equivalent to the voltage of the fully charged fixed high power battery 13, essentially, the fixed high power battery set 13 will not be recharged, thus protecting the fixed high power battery set 13 against damages. Therefore, the present invention ameliorates the conventional compound battery management system in a simple fashion.

In comparison with other conventional technologies, the portable compound battery system according to the present invention provides the following advantages:
1. The present invention provides an electric power system comprising a combination of portable high energy battery set and fixed high power battery set thereby satisfying user's multiple demands on convenient energy replenishment, low price, high reliability as well as sufficient power output capability and reasonable driving range.
2. The present invention can be applied to various types of electric vehicles, and the difficulty in energy replenishment can be effectively reduced such that the high energy battery can fulfill the demand on compactness and portability, so that a user can bring it up to a residence of higher floor or other locations where the electric vehicle may not easily enter for battery recharging.
3. The portable high energy battery set utilized in the present invention focuses on a higher energy-weight ratio in order to carry sufficient energy for daily drive range under reasonable weight and volume conditions; currently available batteries appropriate for this purpose may include high energy Li-ion battery, Li-Polymer battery etc.
4. By means of the variable output power compound battery management module, the present invention can maintain suitable power to recharge the high power battery set thus effectively improving the efficiency during battery recharging and prolonging the life time of the high power battery set.
5. The load information center of the present invention may be an independent module on the electric vehicle, or alternatively configured to be attached to a location, such as a motor controller or dashboard and so forth, where the load requirement information can be acquired.

Through the aforementioned detailed descriptions for the preferred embodiments according to the present invention, it is intended to better illustrate the characteristics and spirit of the present invention rather than restricting the scope of the present invention to the preferred embodiments disclosed in the previous texts. On the contrary, the objective is to encompass all changes and effectively equivalent arrangements within the scope of the present invention as delineated in the following claims of the present application.

## Claims

1. A portable compound battery system, comprising:
a load information center, electrically connected to a load and used to calculate the total power required for the load and, after detecting the information on the state of charge (S. O. C.) and discharge capability of all battery sets in the system, add up the recharge power needed to apply to the fixed high power battery set in order to obtain the power value that the portable high energy battery set should output and generate an output power control signal;
at least one or more portable high energy battery sets, electrically connected to the load information center, in which the portable high energy battery sets have a built-in battery management module;
a fixed high power battery set, electrically connected to the load information center and used to compensate the power insufficient in the power provided by the portable high energy battery sets in comparison with what the load needs;
a variable output power compound battery management module, electrically connected to the portable high energy battery set, the load information center, the fixed high power battery set and the load, in which the variable output power compound battery management module includes a signal communication interface module capable of receiving the output power control signal transferred from the load information center as well as a variable output power DC/DC converter, in which the variable output power DC/DC converter is used to convert the electric energy of the portable high energy battery set into the required power that the load needs to operate, and when the power exceeds what the load needs, the variable output power compound battery management module can recharge additional energy back to the fixed high power battery set in accordance with suitable power.

2. The portable compound battery system according to Claim 1, wherein the signal communication interface module is a digital signal interface or an analog signal interface.

3. The portable compound battery system according to Claim 1, wherein the portable high energy battery set is a high energy density Li-ion battery, Li-polymer battery or fuel cell.

4. The portable compound battery system according to Claim 1, wherein the battery management module of the portable high energy density battery set is used to reduce the difficulty in the portable compound battery system management, and the battery management module can output the S. O. C. information and can cut off the battery output for low S. O. C. protection.

5. The portable compound battery system according to Claim 1, wherein the portable high energy battery set can be further electrically connected to an external recharger in order to recharge by means of the external recharger.

6. The portable compound battery system according to Claim 1, wherein the variable output power DC/DC converter is a set of recharger featuring a variable output power and a maximum current/voltage limitation.

7. The portable compound battery system according to Claim 1, wherein the variable output power DC/DC converter is a boost converter, buck converter or buck-boost converter.

8. The portable compound battery system according to Claim 1, wherein the fixed high power battery set is a battery capable of providing relatively higher discharge current thereby allowing applications in different batteries for serial/parallel connections of battery cells or serial/parallel connections of battery sets.

9. The portable compound battery system according to Claim 1, wherein the fixed high power battery set is a power-typed Lead-acid battery, Ni-MH battery, Ni-Zn battery, Li-Mn/ Li-Fe battery or Li-Polymer battery.
